# EUROPEAN PATENT SPECIFICATION

(11) **EP 3 370 847 B1**
(45) Date of publication and mention of the grant of the patent: **19.08.2020**
(21) Application number: 16801827.3
(22) Date of filing: 02.11.2016
(51) Int. Cl.: B01D 33/23, B01D 39/20, B01D 46/00, B01D 29/01, B01D 29/05, C04B 38/00

(54) **METHOD OF MANUFACTURING FILTER ELEMENT AND FILTER ELEMENT**
VERFAHREN ZUR HERSTELLUNG EINES FILTERELEMENTS UND FILTERELEMENT
METHODE DE FABRICATION D'UN ELEMENT FILTRANT ET ELEMENT FILTRANT

(30) Priority: 03.11.2015 FI 20155796
(43) Date of publication of application: 12.09.2018
(73) Proprietor: Outotec (Finland) Oy, 02230 Espoo (FI)
(72) Inventor: EKBERG, Bjarne, 20360 Turku (FI); VÄNTTINEN, Kari, 02330 Espoo (FI); ILLI, Mika, 01700 Vantaa (FI)
(74) Representative: Kolster Oy Ab
(86) International application number: PCT/FI2016/050769
(87) International publication number: WO 2017/077187

(56) References cited:
- EP-A1- 0 471 910
- WO-A1-2014/188071
- WO-A1-2014/191634
- US-A- 5 655 212
- US-A1- 2005 284 805

## Description

### BACKGROUND

The present invention relates to a method for manufacturing a filter element for a filter apparatus.

The present invention further relates to a filter element.

Filtration is a widely used process whereby a slurry or solid liquid mixture is forced through a media, with the solids retained on the media, as a cake, and the liquid phase passing through. This process is generally well understood in the industry. Examples of filtration types include depth filtration, pressure and vacuum filtration, and gravity and centrifugal filtration.

The cake formation in vacuum filtration is based on generating suction within the filtrate channels. The most commonly used filter media for vacuum filters are filter cloths and coated media, e.g. the ceramic filter medium. These filter media are commonly used in filter apparatuses having filter comprising multiple filter elements, e.g. in rotary vacuum disc filter apparatuses and vacuum belt filter apparatuses.

Common for said rotary vacuum filter apparatuses is a great number of filter elements. Thus the length of the service life of the filter elements is a fundamental factor of efficient use of the rotary vacuum filter apparatuses. Examples of such devices are shown in WO 2014/188071 A1, US 5 655 212 A, WO 2014/191634 A1, EP 0 471 910 A1 and US 2005/284805 A1.

### BRIEF DESCRIPTION

Viewed from an aspect, there can be provided a method for manufacturing a filter element for a filter apparatus, the filter element comprising at least one permeable ceramic filter member, the method comprising the following steps:
- manufacturing a green body of at least one filter member,
- the green body comprising a rough joining interface on at least one of its surface,
- firing the green body with the rough joining interface into the filter member,
- providing a frame member comprising plastic material, and
- attaching the filter member to the frame member in such a manner that at least a part of the surface of the filter member formed as a rough joining interface is in contact with the plastic material of the frame member.

Thereby a manufacturing method resulting filter elements having a long service life may be achieved.

Viewed from another aspect, there can be provided a filter element comprising at least one permeable ceramic filter member that is arranged to form a capillary filter, the filter member comprising
a first filter surface arranged towards an internal cavity inside the filter element, the first filter surface comprising a rough joining interface,
a second filter surface arranged outwards in the filter element, the filter element further comprising
a frame member comprising plastic material, said frame member being attached to the rough joining interface of the filter member.

Thereby filter elements having a long service life may be achieved.

### BRIEF DESCRIPTION OF THE FIGURES

Some embodiments illustrating the present disclosure are described in more detail in the attached drawings, in which
Figures 1a - 1e are schematic views of a method for manufacturing a filter element,
Figure 2 a perspective top view illustrating a disc filter element,
Figure 3 is a perspective top view illustrating a frame member of a disc filter element,
Figure 4 perspective top view illustrating a drum filter element,
Figure 5 is a perspective top view illustrating a belt filter element.

In the figures, some embodiments are shown simplified for the sake of clarity. Similar parts are marked with the same reference numbers in the figures.

### DETAILED DESCRIPTION

Principles of the embodiments can be applied for drying or dewatering fluid materials in any industrial processes, particularly in mineral and mining industries. In embodiments described herein, a material to be filtered is referred to as slurry, but embodiments are not intended to be restricted to this type of fluid material. The slurry may have high solids concentration, e.g. base metal concentrates, iron ore, chromite, ferrochrome, copper, gold, cobalt, nickel, zinc, lead and pyrite.

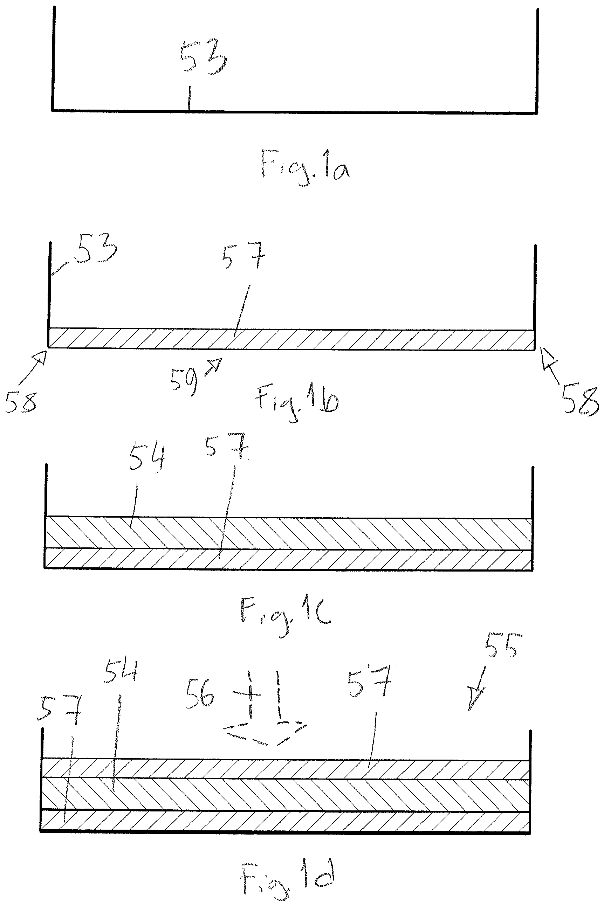

Figures 1a - 1e are schematic views of a method for manufacturing a filter element.

Figure 1a illustrates a cast mould 53 that gives the desired shape or form to the filter member 3 to be manufactured. The mould 53 itself may be made of metal or ceramics.

Figure 1b shows a method step where coarse material or layer of coarse material 57 has been added in the mould 53. The coarse material 57 may be added e.g. by just pouring the material in the mould 53.

According to an embodiment, the coarse material 57 may comprise a ceramic material or a composition comprising a ceramic material. According to an embodiment, the ceramic material may comprise alumina (Al₂O₃), aluminium silicate, silicon carbide and/or titania (TiO₂).

According to an embodiment, the coarse material 57 comprises material particles, the grit number of which is lower than or equal to 180, preferably comprising a grit number in the range of 40-180, more preferably comprising a grit number in the range of 60 to 120. This kind of material has been discovered to enable a very durable bond to a frame member material discussed later in this description.

According to another embodiment, the coarse material 57 comprises ceramic fibers the coarseness of which corresponding to grit number lower than or equal to 180.

According to an embodiment, the layer of coarse material 57 is distributed on the whole area of the mould. According to another embodiment, the coarse material 57 is distributed only on certain parts of the mould, e.g. on edges 58 of the mould and/or central area 59 of the mould. This way the size and location of the rough joining interface 7 in the filter member 3 may be optimized. The surface outside the rough joining interface 7 has a smoother surface, i.e. its grit number is more than 180. According to an embodiment, said smooth surface has grit number of 600 or more. This kind of smooth surface may reduce contaminations of the surface as well as provide more effective removal of a residual cake in a backflush washing of the filter element 1.

Figure 1c shows a method step where a layer of ceramic material 54 has been added on the layer of coarse material 57. This may be done e.g. by just pouring the material in the mould.

According to an embodiment, the ceramic material may comprise a ceramic material or a composition comprising a ceramic material. Using these materials very good filtering properties may be achieved. According to an embodiment, the ceramic material may comprise alumina (Al₂O₃), aluminium silicate, silicon carbide and/or titania (TiO₂).

However, the layer of ceramic material 54 comprises not only the ceramic material but also binder material, such as Al-silicate based materials, e.g. clay and/or feldspar. The binder material makes the layer of ceramic material 54 wet and sticky. Thus the coarse material sticks to the layer of ceramic material 54.

According to an embodiment, the layer of ceramic material 54 may be construed from two or even more layers that may have different compositions in material selection, coarseness etc.

Also the layer of coarse material 57 may be construed from two or even more layers. For instance, the layer of coarse material 57 may comprise a first coarse layer and a second coarse layer having more coarse particles than said first coarse layer. The first coarse layer is arranged on the layer 54 and the second coarse layer on said first coarse layer. The first coarse layer being situated between the layer of ceramic material 54 and the second coarse layer may improve the attachment of the second coarse layer compared to a structure where it would be attached directly on the layer of ceramic material 54.

Figure 1d shows an optional method step where a second layer of coarse material 57 has been added on the layer of ceramic material 54. This layer may be similar with the layer added in the method step shown in Figure 1b, or alternatively, may differ from said layer in some details, such as in selection of material, grit size and/or distribution of the material.

It is to be noted, that the second layer of coarse material 57 is totally optional. In other words, the method may be put into practice without adding the second layer.

The layer of ceramic material 54 and the layer(s) of coarse material 57 constitute a green body 55. The green body 55 is ready for firing step, where the ceramic materials are fired or sintered in high temperature. The casting in the cast mould assists the attachment between the layers of the green body 55. As a result of the firing step the filter member 3 is completed. However, some additional work may be needed, for instance finishing work, coding, painting etc.

According to an embodiment, the green body 55 is pressed 56 prior to the firing step. An advantage of the pressing is that the material components mix slightly with each other which may enhance strong bonds between material particles.

The pressing step may also take place in step 1c in case that only one layer of coarse material 57 is needed in the filter member.

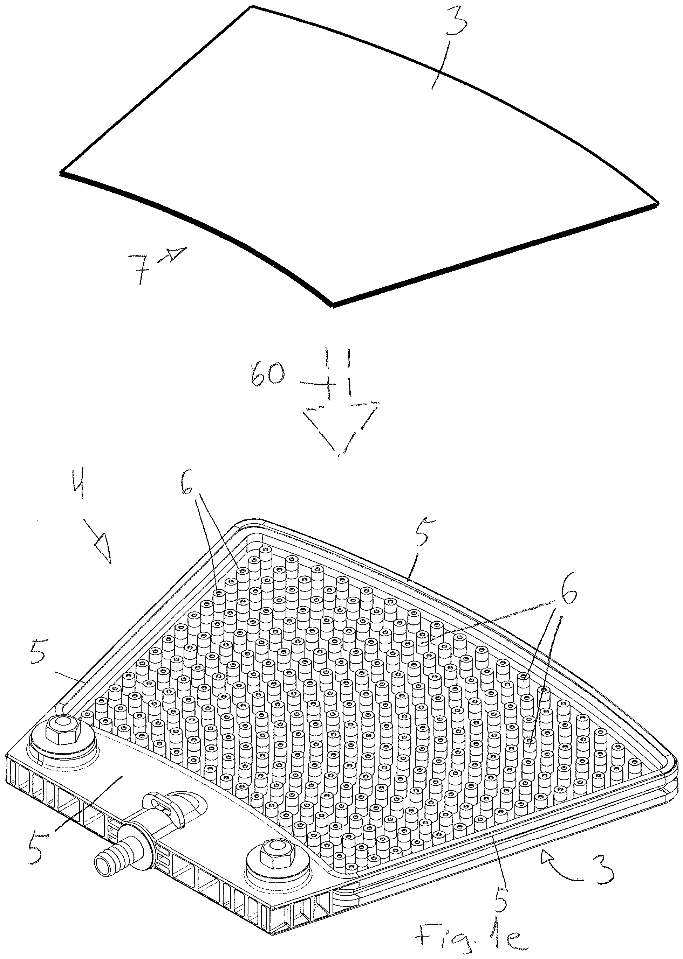

Figure 1e shows a method step for attaching 60 the filter member 3 to a frame member 4. The filter element to be manufactured is here a disc filter element 1 that has a shape of a truncated-sector. Typically the filter element comprises 1 at least two filter members 3, one on the first side and another on the second side of the filter element 1.

The frame member 4 comprises an edge part 5, and plurality of support parts 6 that are arranged to contact the central parts of the filter member 3 when the filter member 3 is mounted to the frame member 4.

The frame member 4 comprises a polymer material or a composition comprising a polymer material. This enables making the frame member 4 and, thus, the filter element light, avoiding the frame absorbing water that would increase the weight of the frame member 4 and the filter element 1 in use and/or providing more flexibility in the frame member 4 and, therefore, the filter element 1. The polymer material may comprise a thermoplastic, for example. The thermoplastic may comprise at least one of the following: polyamide (PA), polyolefin, such as polypropylene (PP), polysulphone (PSU), polyethersulphone (PES), polyphenyleneoxide (PPO), polyphenylenesulphide (PPS) and acrylo-butadiene-styrene (ABS). The thermoplastics may be particularly suitable for molding such frame member 4 structures. According to another embodiment, the polymer material may comprise a thermoset plastic, for instance an epoxy, polyurethane or polyester.

The filter member 3 is attached to the edge part 5 in such a manner that the rough joining interface 7 is in contact with the plastic material of said edge part 5. Thus the edges of the filter member are supported.

Furthermore, the frame member 4 comprises support parts 6 that are arranged to contact the central parts of the filter member 3 when the filter member 3 is mounted to the frame member 4. At least some of the support parts 6 are attached to the rough joining interface 7 of the filter member 3. An advantage is that the filter member 3 is supported also in its central parts and bending of the filter member 3 under pressure is effectively prohibited.

According to an embodiment, the edge part 5 of the frame member 4 may comprises a material that differs from the material of the support parts 6. In other words, parts of the frame member 4 may comprise different materials or combinations of materials. This enables selection of a material most suitable for each structural part of the frame member 4 from part-specific requirement point of view.

According to another embodiment, the edge part 5 of the frame member 4 may comprise the same material as the material of the support parts 6. This ensures that the parts of the frame member 4 have the same thermal expansion coefficient, which helps avoiding forces being formed between the edge part 5 and the support parts 6.

In the frame member 4 shown in Figure 1e, there is already one filter member 3 attached to the frame member 4. The support parts 6 are attached to this filter member.

According to an embodiment, the support parts 6 are spaced from other support parts 6, such that the support parts 6 do not transfer forces to one another. Such support parts 6 can be formed to be easy to manufacture and modular, such that similar support parts 6 can be used in different kind of filter element configurations. This can save in number and cost of molds, for example.

According to another embodiment, each support part 6 is connected to at least one other support part 6 by e.g. a connector 8. Such a structure facilitates the handling of the support parts 6 during assembly.

The attaching step 60 may be carry out by several methods. According to an embodiment, the filter member 3 is glued to the frame member 4. Gluing may provide a strong bond due to chemical interactions and/or mechanical entanglements of the material of the rough joining interface 7 and the corresponding polymer material of the frame member 4.

According to an embodiment, the glue used in the attaching step 60 may be selected from the following list: epoxy, acrylics, anaerobics, cyanoacrylatics, nitrile-phenolics, polyurethanes, silicones, vinyl-phenolics, and hot-melts, such as polyamides and polyimides. Some examples of commercial glues have been proven good in the attaching step 60 are *3M Scotch Weld DP 490* and *Hysol 9460.* These glues are especially favorable for gluing PPO and PES polymers to the filter member 3.

According to an embodiment, the filter member 3 is hot melted to the frame member 4. The heat energy needed for melting the polymer material of the frame member 4 may be provided by a method selected from the following list: friction welding, resistance-wire welding, ultrasonic welding, heated-tool welding, electromagnetic welding, and vibration welding. An advantage is that the attaching step 60 may be realized fast and quickly.

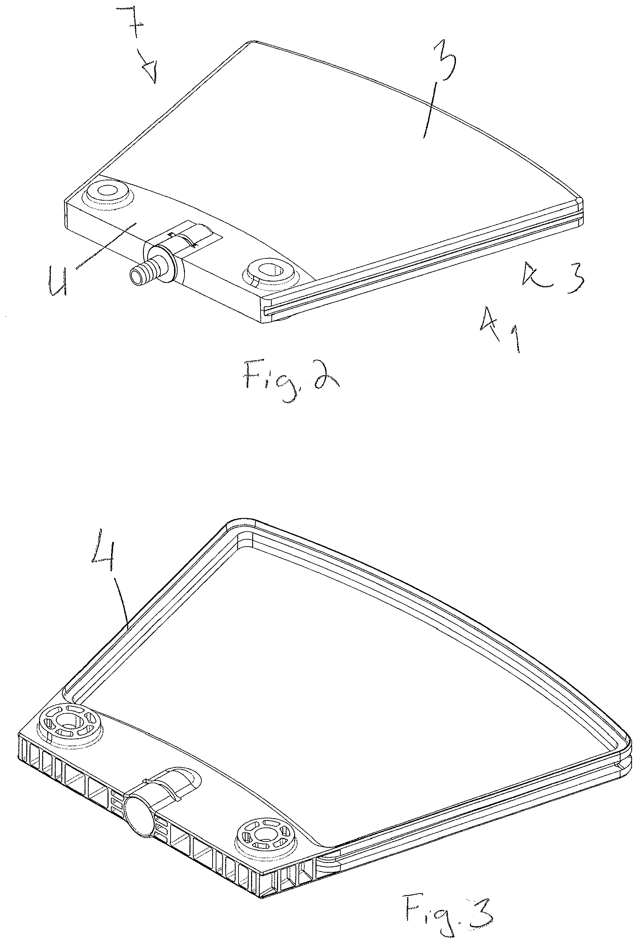

Figure 2 is a perspective top view illustrating a disc filter element. The filter element 1 comprises typically two filter members 3, one on the first side and another on the second side of the filter element 1. The frame member 4 is arranged to support the at least one filter member 3 in such a manner that the internal cavity 12 is formed between the two filter members 3.

The filter member 3 is arranged fixedly to the frame member 4. This enables providing a durable bond between the filter member 3 and the frame member 4. This kind of structure provides a filter element 1, is beneficial from manufacturing point of view and/or provide a filter element 1 that is light and durable when vacuum (= negative pressure) or pressure (= positive pressure) is provided inside the internal cavity 12.

The filter member 3 may form a capillary filter. A capillary filter refers to a filter, wherein the structure and/or the material of the filter, such as the filter member 3, enables a certain amount of liquid, such as water, to be kept in the filter by a capillary action despite a differential pressure formed by a gas surrounding said filter member. The liquid may be kept in micro-pores provided in the filter member 3, for example. Such a capillary filter enables the liquid to be filtered to easily flow through the filter member 3, but when all free liquid, such as the free liquid entering the filter member 3 from the (filter) cake formed thereon, has passed through the filter member 3, the remaining liquid kept in the filter by the capillary action prevents flow of gas, such as air, through the wet filter member 3. The capillary action thus does not participate in the dewatering itself, for instance by sucking water out of the slurry. In other words, in a capillary filter liquid, usually water, may be kept in the micro-pores of the filter member 3 by capillary forces and no flow of gas takes place after the free water in the residue, such as the cake, has been removed. According to an embodiment, the filter member 3 formed as a capillary filter prevents air from entering the internal cavity 12.

According to an embodiment, the bubble point of the filter member 3 is at least 0.2 bar. In this context, the bubble point refers to an effective bubble point. The effective bubble point describes a pressure difference between the outer and inner surfaces of the filter member 3, at which 1 liter of air flows through one square meter of the outer surface during a one minute time. In other words, when in such a filter member a 0.2 bar pressure difference is provided between the outside of the filter element 1 and the inside of the filter element 1, such as within the internal cavity 12, a maximum of 1 liter of air should be able to pass through a square meter of the second filter surface of the filter member 3 during a one minute time. If a flow of air through the filter member 3 at 1 liter per minute requires a pressure difference of 0.2 bar or greater, the bubble point of the filter member 3 is thus at least 0.2 bar. Thereby, in embodiments where it is not practical to block the flow of air completely, only a very minor amount of air may be able to flow through the filter member 3 when the cake is being dried. When the cake is being dried, an underpressure is provided within the filter element 1, such as within the internal cavity 12, which means than the pressure inside the filter element 1 is lower that the pressure outside the filter element 1.

According to an embodiment, at least 600 liter of water per an hour and per one square meter of said outer surface may be able to pass through the filter member 3 when a pressure difference of 1 bar is provided between the outer and the inner surfaces of the filter member 3. Thus, a sufficient amount of water may flow through the filter member 3 to provide efficient filtering of the slurry, especially when the actual filtering takes place. During filtering, an underpressure is provided within the filter element 1, such as within the internal cavity 12, which means that the pressure inside the filter element 1 is lower than the pressure outside the filter element 1.

The pressure difference between the inside of the filter element 1 and the outside of the filter element 1 may be greater during the actual filtering than during the drying of the cake. The drying of the cake may take place for instance in a disc filter apparatus 2 when the filter element 1 in question has passed the filtering position, such as the lowest position in the filter 15 and rotated back upwards. In other words, a specific filter element 1 participates in the actual filtering at a different point of time and at a different position in the filter apparatus 2 than in the drying of the cake. Thus, the relevant pressure difference for the actual filtering and the drying of the cake may be different from one another.

The structure of the filter member 3, such as the mean pore size of the filter member 3, affects both the effective bubble point and the flow of water through the filter member 3.

Figure 3 is a perspective top view illustrating another frame member of a disc filter element. This frame member 4 does not comprise any support parts 6 but the attachment of the frame member 4 and the filter member 3 takes place on the edges of the filter member 3 and the edge parts 5 of the frame member 4 only. This provides very simple attaching step 60.

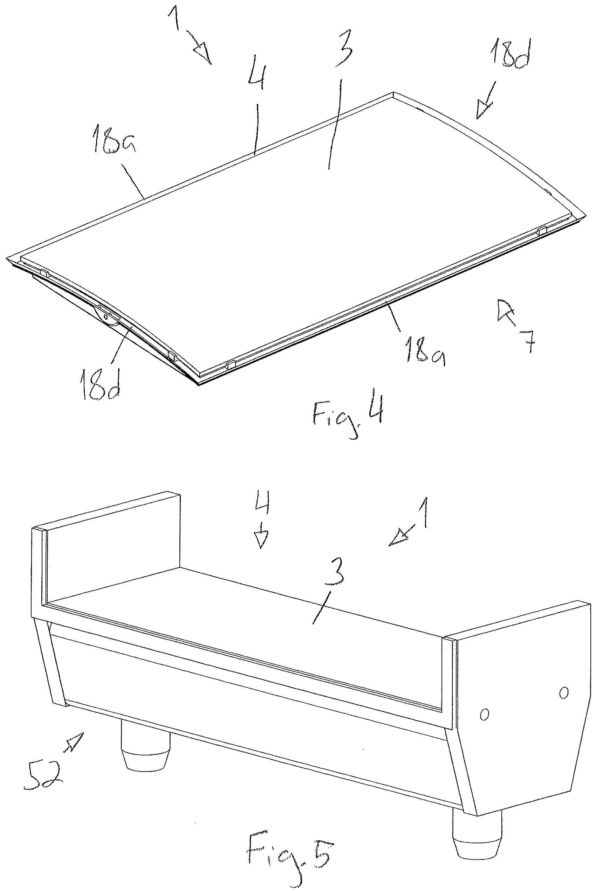

Figure 4 perspective top view illustrating a drum filter element. According to an embodiment, the filter element 1 may be a filter element 1 of a drum filter apparatus. Such a filter element 1 may comprise a pair of side edge surfaces 18a arranged parallel with each other, and comprising second filter surface(s) 9b only on one side of the filter element 1. Such a filter element 1 may further comprise a pair of curved end surfaces 18d, wherein the curvature of the curved end surfaces 18d and the curvature of the second filter surface(s) 9b of said filter element 1 coincide with the circumference of the outer surface of a drum filter of the drum filter apparatus 2.

The filter member 3 comprises a rough joining interface 7 through which it is attached to the frame member 4. The drum filter element may be manufactured as described earlier in this description.

Figure 5 is a perspective top view illustrating a belt filter element. According to an embodiment, the filter element 1 is a filter element of a belt filter apparatus. The filter element 1 comprises a frame member 4 comprising a vacuum box 52 that comprises a bottom, two opposite long sides, and two opposite end walls. The filter member 3 comprises a rough joining interface 7 through which it is attached to the frame member 4. The belt filter element may be manufactured as described earlier in this description.

## Claims

1. A method for manufacturing a filter element (1) for a filter apparatus (2), the filter element comprising at least one permeable ceramic filter member (3), the method comprising the following steps:
manufacturing a green body (55) of at least one filter member (3),
the green body comprising a rough joining interface (7) having a grit number of 180 or lower on at least one of its surface,
firing the green body with the rough joining interface into the filter member, **characterized by**
providing a frame member (4) comprising plastic material,
attaching (60) the filter member to the frame member in such a manner that at least a part of the surface of the filter member formed as a rough joining interface is in contact with the plastic material of the frame member,
providing the frame member comprising support parts (6) that are arranged to contact the central parts of the filter member when the filter member is mounted to the frame member, and
attaching at least some of the support parts to the rough joining interface.

2. The method according to claim 1, wherein the manufacturing of the green body (55) comprises casting in a cast mould (53).

3. The method according to claim 2, wherein the manufacturing comprises
arranging coarse material (57) into contact with a surface of a ceramic material layer (54).

4. The method according to any of the preceding claims, wherein the manufacturing comprises pressing.

5. The method according to claim 4, wherein the forming of the rough joining interface (7) comprises adding coarse material (57) on the surface of the ceramic material layer (54) prior to the pressing.

6. The method according to any one of the preceding claims, comprising providing a frame member (4) that comprises an edge part (5), and
attaching the filter member (3) to said edge part in such a manner that the rough joining interface (7) is in contact with the plastic material of said edge part.

7. The method according to any one of the preceding claims, comprising gluing the filter member (3) to the frame member (4).

8. The method according to claim 7, comprising gluing by glue selected from the following list: epoxy, acrylics, anaerobics, cyanoacrylatics, nitrile-phenolics, polyurethanes, silicones, vinyl-phenolics, and hot-melts, such as polyamides and polyimides.

9. The method according to any one of the claims 1 to 7, comprising hot melting the filter member (3) to the frame member (4), wherein the heat energy is provided by a method selected from the following list: friction welding, resistance-wire welding, ultrasonic welding, heated-tool welding, electromagnetic welding, and vibration welding.

10. The method according to any one of the preceding claims, comprising forming the rough joining interface (7) in only a first part of the surface of the filter member (3) and leaving a second part of said surface as a smooth surface having a grit number of 600 or more.

11. The method according to any one of the preceding claims, comprising forming the rough joining interface (7) on one surface of the filter member (3) only.

12. The method according to any one of the preceding claims, comprising providing the rough joining interface (7) by particles or fibers.

13. The method according to any one of the preceding claims, the ceramic filter member (3) comprising aluminum oxide, silicon carbide, aluminium silicates, and/or titania.

14. A filter element (1) comprising at least one permeable ceramic filter member (3) that is arranged to form a capillary filter, the filter member (3) comprising
a first filter surface arranged towards an internal cavity (12) inside the filter element, the first filter surface comprising a rough joining interface (7) having a grit number of 180 or lower,
a second filter surface (9b) arranged outwards in the filter element, the filter element further comprising
a frame member (4), **characterized in that** the frame member comprises plastic material,
said frame member being attached to the rough joining interface of the filter member,
the frame member comprises support parts (6) that are arranged to contact the central parts of the filter member, and that
at least some of the support parts are attached to the rough joining interface.

15. The filter element (1) according to claim 14, wherein the filter member (3) comprises the rough joining interface (7) on its one surface only.

16. The filter element (1) according to any one of claims 14 - 15, being a disc filter element, a drum filter element or a belt filter element.

## Patentansprüche

1. Verfahren zum Herstellen eines Filterelements (1) für eine Filtervorrichtung (2), wobei das Filterelement mindestens eine durchlässige Keramikfilterkomponente (3) umfasst, wobei das Verfahren die folgenden Schritte umfasst:
Herstellen eines Rohlings (55) von mindestens einer Filterkomponente (3),
wobei der Rohling auf mindestens einer seiner Flächen eine raue Verbindungsschnittstelle (7) mit einer Kornnummer von 180 oder weniger umfasst,
Brennen des Rohlings mit der rauen Verbindungsschnittstelle in die Filterkomponente, **gekennzeichnet durch**
Bereitstellen einer Rahmenkomponente (4), die ein Kunststoffmaterial umfasst,
Befestigen (60) der Filterkomponente derart an der Rahmenkomponente, dass mindestens ein Teil der Fläche der Filterkomponente, die als eine raue Verbindungsschnittstelle gebildet ist, das Kunststoffmaterial der Rahmenkomponente berührt,
Bereitstellen der Rahmenkomponente, die Stützteile (6) umfasst, die angeordnet sind, die zentralen Teile der Filterkomponente zu berühren, wenn die Filterkomponente an der Rahmenkomponente montiert ist, und
Befestigen von mindestens einigen der Stützteile an der rauen Verbindungsschnittstelle.

2. Verfahren nach Anspruch 1, wobei das Herstellen des Rohlings (55) das Gießen in einer Gießform (53) umfasst.

3. Verfahren nach Anspruch 2, wobei das Herstellen Folgendes umfasst
Anordnen eines groben Materials (57) in Berührung mit einer Fläche einer Keramikmaterialschicht (54).

4. Verfahren nach einem der vorhergehenden Ansprüche, wobei das Herstellen ein Pressen umfasst.

5. Verfahren nach Anspruch 4, wobei das Bilden der rauen Verbindungsschnittstelle (7) vor dem Pressen umfasst das Hinzufügen von grobem Material (57) auf der Fläche der Keramikmaterialschicht (54).

6. Verfahren nach einem der vorhergehenden Ansprüche, das das Bereitstellen einer Rahmenkomponente (4) umfasst, die ein Kantenteil (5) umfasst, und
das Befestigen der Filterkomponente (3) derart am Kantenteil, dass die raue Verbindungsschnittstelle (7) das Kunststoffmaterial des Kantenteils berührt.

7. Verfahren nach einem der vorhergehenden Ansprüche, das das Kleben der Filterkomponente (3) an die Rahmenkomponente (4) umfasst.

8. Verfahren nach Anspruch 7, das das Kleben mit einem Kleber umfasst, der aus der folgenden Liste ausgewählt ist: Epoxid, Acryl, anaerobe Kleber, Cyanoacrylate, Nitrilphenole, Polyurethane, Silicone, Vinylphenole sowie Schmelzkleber wie Polyamide und Polyimide.

9. Verfahren nach einem der Ansprüche 1 bis 7, das das Heißschmelzen der Filterkomponente (3) an die Rahmenkomponente (4) umfasst, wobei die Wärmeenergie durch ein Verfahren bereitgestellt wird, das aus der folgenden Liste ausgewählt ist: Reibschweißen, Widerstandsdrahtschweißen, Ultraschallschweißen, Heizkeilschweißen, elektromagnetisches Schweißen und Vibrationsschweißen.

10. Verfahren nach einem der vorhergehenden Ansprüche, das das Bilden der rauen Verbindungsschnittstelle (7) nur in einem ersten Teil der Fläche der Filterkomponente (3) und das Belassen eines zweiten Teils der Fläche als eine glatte Fläche mit einer Kornnummer von 600 oder mehr umfasst.

11. Verfahren nach einem der vorhergehenden Ansprüche, das das Bilden der rauen Verbindungsschnittstelle (7) nur auf einer Fläche der Filterkomponente (3) umfasst.

12. Verfahren nach einem der vorhergehenden Ansprüche, das das Bereitstellen der rauen Verbindungsschnittstelle (7) durch Partikel oder Fasern umfasst.

13. Verfahren nach einem der vorhergehenden Ansprüche, wobei die Keramikfilterkomponente (3) Aluminiumoxid, Siliciumcarbid, Aluminiumsilicate und/oder Titandioxid umfasst.

14. Filterelement (1), das mindestens eine durchlässige Keramikfilterkomponente (3) umfasst, die angeordnet ist, ein Kapillarfilter zu bilden, wobei die Filterkomponente (3) Folgendes umfasst
eine erste Filterfläche, die zu einem internen Hohlraum (12) im Filterelement angeordnet ist, wobei die erste Filterfläche eine raue Verbindungsschnittstelle (7) mit einer Kornnummer von 180 oder weniger umfasst,
eine zweite Filterfläche (9b), die außerhalb des Filterelements angeordnet ist, wobei das Filterelement ferner Folgendes umfasst
eine Rahmenkomponente (4), **dadurch gekennzeichnet, dass** die Rahmenkomponente ein Kunststoffmaterial umfasst,
die Rahmenkomponente an der rauen Verbindungsschnittstelle der Filterkomponente befestigt ist,
die Rahmenkomponente Stützteile (6) umfasst, die angeordnet sind, die zentralen Teile der Filterkomponente zu berühren, und dass
mindestens einige der Stützteile an der rauen Verbindungsschnittstelle befestigt sind.

15. Filterelement (1) nach Anspruch 14, wobei die Filterkomponente (3) die raue Verbindungsschnittstelle (7) nur auf einer seiner Flächen umfasst.

16. Filterelement (1) nach einem der Ansprüche 14-15, bei dem es sich um ein Scheibenfilterelement, ein Trommelfilterelement oder ein Bandfilterelement handelt.

## Revendications

1. Procédé pour fabriquer un élément filtrant (1) pour un appareil filtrant (2), l'élément filtrant comprenant au moins un élément filtrant en céramique perméable (3), le procédé comprenant les étapes suivantes :
fabriquer un corps cru (55) d'au moins un élément filtrant (3),
le corps cru comprenant une interface d'assemblage rugueuse (7) ayant une classe granulométrique de 180 ou inférieure sur au moins l'une de ses surfaces,
faire cuire le corps cru avec l'interface d'assemblage rugueuse dans l'élément filtrant, **caractérisé par** les étapes suivantes :
prévoir un élément de bâti (4) comprenant une matière plastique,
fixer (60) l'élément filtrant à l'élément de bâti de sorte qu'au moins une partie de la surface de l'élément filtrant formé en tant qu'interface d'assemblage rugueuse, est en contact avec la matière plastique de l'élément de bâti,
prévoir l'élément de bâti comprenant des parties de support (6) qui sont agencées pour être en contact avec les parties centrales de l'élément filtrant lorsque l'élément filtrant est monté sur l'élément de bâti, et
fixer au moins une certaine partie des parties de support à l'interface d'assemblage rugueuse.

2. Procédé selon la revendication 1, dans lequel la fabrication du corps cru (55) comprend le moulage dans un moule de moulage (53).

3. Procédé selon la revendication 2, dans lequel la fabrication comprend l'étape suivante :
agencer un matériau brut (57) en contact avec une surface d'une couche de matériau en céramique (54).

4. Procédé selon l'une quelconque des revendications précédentes, dans lequel la fabrication comprend le pressage.

5. Procédé selon la revendication 4, dans lequel le formage de l'interface d'assemblage rugueuse (7) comprend l'étape pour ajouter le matériau brut (57) sur la surface de la couche de matériau en céramique (54) avant le pressage.

6. Procédé selon l'une quelconque des revendications précédentes, comprenant l'étape pour fournir un élément de bâti (4) qui comprend une partie de bord (5), et
l'étape pour fixer l'élément filtrant (3) sur ladite partie de bord de sorte que l'interface d'assemblage rugueuse (7) est en contact avec la matière plastique de ladite partie de bord.

7. Procédé selon l'une quelconque des revendications précédentes, comprenant l'étape pour coller l'élément filtrant (3) à l'élément de bâti (4).

8. Procédé selon la revendication 7, comprenant l'étape de collage avec de la colle sélectionnée dans la liste suivante : l'époxy, les acryliques, les anaérobies, les cyanoacrylates, les phénoliques nitriles, les polyuréthanes, les silicones, les phénoliques vinyles et les colles thermofusibles, telles les polyamides et les polyimides.

9. Procédé selon l'une quelconque des revendications 1 à 7, comprenant l'étape pour faire fondre thermiquement l'élément filtrant (3) sur l'élément de bâti (4), dans lequel l'énergie thermique est fournie par un procédé sélectionné dans la liste suivante : le soudage par friction, le soudage par résistance, le soudage par ultrasons, le soudage par outil chauffé, le soudage électromagnétique et le soudage par vibrations.

10. Procédé selon l'une quelconque des revendications précédentes, comprenant l'étape pour former l'interface d'assemblage rugueuse (7) uniquement dans une première partie de la surface de l'élément filtrant (3) et laisser une seconde partie de ladite surface sous la forme d'une surface lisse ayant une classe granulométrique de 600 ou supérieure.

11. Procédé selon l'une quelconque des revendications précédentes, comprenant l'étape pour former l'interface d'assemblage rugueuse (7) sur une surface de l'élément filtrant (3) uniquement.

12. Procédé selon l'une quelconque des revendications précédentes, comprenant l'étape pour fournir l'interface d'assemblage rugueuse (7) grâce à des particules ou des fibres.

13. Procédé selon l'une quelconque des revendications précédentes, l'élément filtrant en céramique (3) comprenant de l'oxyde d'aluminium, du carbure de silicium, des silicates d'aluminium et/ou du dioxyde de titane.

14. Elément filtrant (1) comprenant au moins un élément filtrant en céramique perméable (3) qui est agencé pour former un filtre capillaire, l'élément filtrant (3) comprenant :
une première surface filtrante agencée vers une cavité interne (12) à l'intérieur de l'élément filtrant, la première surface filtrante comprenant une interface d'assemblage rugueuse (7) ayant une classe granulométrique de 180 ou inférieure,
une seconde surface filtrante (9b) agencée vers l'extérieur dans l'élément filtrant, l'élément filtrant comprenant en outre :
un élément de bâti (4) **caractérisé en ce que** :
l'élément de bâti comprend la matière plastique,
ledit élément de bâti étant fixé sur l'interface d'assemblage rugueuse de l'élément filtrant,
l'élément de bâti comprend des parties de support (6) qui sont agencées pour être en contact avec les parties centrales de l'élément filtrant, et **en ce que** :
au moins une certaine partie des parties de support est fixée à l'interface d'assemblage rugueuse.

15. Elément filtrant (1) selon la revendication 14, dans lequel l'élément filtrant (3) comprend l'interface d'assemblage rugueuse (7) uniquement sur l'une de ses surfaces.

16. Elément filtrant (1) selon l'une quelconque des revendications 14 à 15, qui est un élément filtrant à disque, un élément filtrant à tambour ou un élément filtrant à courroie.
